# EUROPEAN PATENT SPECIFICATION

(11) **EP 3 972 201 B1**
(45) Date of publication and mention of the grant of the patent: **06.08.2025**
(21) Application number: 20835319.3
(22) Date of filing: 22.06.2020
(51) Int. Cl.: H04L 43/067, H04L 43/08

(54) **MEASUREMENT REPORTING METHOD AND NETWORK NODE**
MESSMELDUNGSVERFAHREN UND NETZWERKKNOTEN
PROCÉDÉ DE RAPPORT DE MESURE ET NOEUD DE RÉSEAU

(30) Priority: 01.07.2019 CN 201910586732
(43) Date of publication of application: 23.03.2022
(73) Proprietor: Huawei Technologies Co., Ltd., Shenzhen, Guangdong 518129 (CN)
(72) Inventor: LU, Xiaogang, Shenzhen, Guangdong 518129 (CN); GAO, Hongliang, Shenzhen, Guangdong 518129 (CN); CHENG, Liang, Shenzhen, Guangdong 518129 (CN); DANG, Juanna, Shenzhen, Guangdong 518129 (CN); LI, Dongfeng, Shenzhen, Guangdong 518129 (CN)
(74) Representative: MERH-IP Matias Erny Reichl Hoffmann Patentanwälte PartG mbB
(86) International application number: PCT/CN2020/097316
(87) International publication number: WO 2021/000754

(56) References cited:
- EP-A1- 2 843 886
- WO-A1-2008/133471
- WO-A1-2016/153286
- CN-A- 101 272 290
- CN-A- 102 547 840
- CN-A- 103 634 839
- HAO-HUA CHU ET AL: "Dynamic multi-path communication for video traffic", SYSTEM SCIENCES, 1997, PROCEEDINGS OF THE THIRTIETH HWAII INTERNATIONA L CONFERENCE ON WAILEA, HI, USA 7-10 JAN. 1997, LOS ALAMITOS, CA, USA,IEEE COMPUT. SOC, US, vol. 1, 7 January 1997 (1997-01-07), pages 695 - 704, XP010272054, ISBN: 978-0-8186-7743-4, DOI: 10.1109/HICSS.1997.667449
- CISCO SYSTEMS ET AL.: "Pseudo-CR on SRv6 Evaluation", 3GPP TSG-CT WG4 MEETING #90 C4-191009, 12 April 2019 (2019-04-12), XP051699019, DOI: 20200901153623A
- SAMSUNG: "SN Measurement report transmission path selection in EN-DC", 3GPP TSG-RAN WG2 NR AD HOC#2 R2-1706936, 29 June 2017 (2017-06-29), XP051301433, DOI: 20200901153712A

## Description

### TECHNICAL FIELD

This application relates to the communication field, and more specifically, to a measurement reporting method and a network node.

### BACKGROUND

With the development of the internet, internet protocol version 6 (Internet Protocol version 6, IPv6) is a next generation IP protocol designed by the Internet Engineering Task Force to replace internet protocol version 4 (Internet Protocol version 4, IPv4). Internet protocol version 6 segment routing (Internet Protocol version 6 Segment Routing, SRv6) is a method designed based on a concept of source routing to forward an IPv6 packet on a network. In segment routing SR based on an IPv6 forwarding plane, a segment routing header (Segment Routing Header, SRH) is inserted into an IPv6 packet, an explicit IPv6 address stack is pushed into the SRH, and transit nodes continuously update destination addresses and offset address stacks, to implement hop-by-hop forwarding. In SRv6, one tunnel may include a plurality of paths to expand network bandwidth, increase a throughput, and improve network flexibility and availability. In an actual network, congestion statuses of paths are different. When congestion statuses of corresponding paths are measured, for a plurality of paths of a same tunnel, measurement results cannot be reported in a timely manner. As a result, measurement reporting precision is low.

HAO-HUA CHU ET AL: "Dynamic multi-path communication for video traffic", SYSTEM SCIENCES, 1997, PROCEEDINGS OF THE THIRTIETH HWAII INTERNATIONA L CONFERENCE ON WAILEA, HI, USA 7-10 JAN. 1997, LOS ALAMITOS, CA, USA,IEEE COMPUT. SOC, US, vol. 1, 7 January 1997 (1997-01-07), pages 695-704, XP010272054, DOI: 10.1109/HICSS.1997.667449 ISBN: 978-0-8186-7743-4 discloses a protocol architecture wherein: at the source, the packet dispatcher sends and controls concurrent transmission of packets through its multiple paths using the load distribution information of multiple paths. The QoS monitor receives the feedback information from the destination which carries the congestion level of every path of a connection. At the destination, the packet receiver receives the concurrent transmission of packets on multiple paths. Since multiple paths may have varying end-to-end delay, the receiving dispatcher needs to reorder the packets in their sending sequence. The arrival of packets is monitored with respect to the loss of packet by the feedback controller. When a specified value of lost packets is detected over certain period of time, the feedback controller signals the source with feedback information about the loss rate.

WO 2008/133471 A1 discloses a method for transmitting and receiving a measurement report of a mobile terminal. A network transmits a paging message to the mobile terminal for performing the measurement report or transmits a PDU (Protocol Data Unit) having segmented SDU (Service Data Unit). The mobile terminal transmits the measurement report upon receiving the paging message or the PDU having the segmented SDU.

In EP 2 843 886 A1, it is disclosed a method and a transmitting node for redirecting of a flow of data packets to a path of alternative paths, and a method and a receiving node for enabling redirection of a flow of data packets to a path of alternative paths, where data packets are marked with a value indicating the importance of the data packets.

### SUMMARY

This application provides a measurement reporting method and a network node, to improve measurement reporting precision, so that a congestion degree of a corresponding path can be adjusted based on a measurement result of each path.

Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

According to a first aspect, a measurement reporting method is provided. The method is performed in a communication system including a first network node and a second network node, a plurality of paths are configured for one tunnel between the first network node and the second network node, the method is applied to the first network node, and the method includes: receiving from the second network node measurement packets on the plurality of paths, wherein the measurement packets comprise a fist measurement packet, wherein the first measurement packet is used to indicate the first network node to report measurement results, wherein the first measurement packet is a measurement packet first received by the first network node on the plurality of paths; and sending a first result packet to the second network node, where the first result packet includes a result packet corresponding to a measurement result of each of the plurality of paths in a first time interval, and the first result packet is used to indicate the measurement result of each of the plurality of paths in the first time interval.

After the first network node receives the first measurement packet, the first network node performs measurement, and sends the first result packet to the second network node, where the first result packet includes the result packet corresponding to the measurement result of each of the plurality of paths in the first time interval, and the first result packet is used to indicate the measurement result of each of the plurality of paths in the first time interval. This improves measurement reporting precision. The first measurement packet is the measurement packet first received by the first network node on the plurality of paths. The first network node performs measurement after receiving the first received measurement packet on the plurality of paths, to improve congestion measurement efficiency.

With reference to the first aspect, in a possible implementation, the method further includes: sending a second result packet to the second network node at a periodicity of the first time interval, where the second result packet includes the result packet corresponding to the measurement result of each of the plurality of paths in the first time interval, and the second result packet is used to indicate the measurement result of each of the plurality of paths in the first time interval.

The first network node may send the second result packet to the second network node at a periodicity of the first time interval, where the second result packet is used to indicate the measurement result of each of the plurality of paths in the first time interval. In addition, the first network node may send result packets to the second network node at equal time intervals. This can further improve the measurement reporting precision.

With reference to the first aspect, in a possible implementation, the first result packet further includes a sequence number of the result packet corresponding to the measurement result of each of the plurality of paths in the first time interval, and the sequence number of the result packet is used to indicate a ranking of the result packet generated by the first network node.

The first result packet further includes the sequence number of the result packet corresponding to the measurement result of each of the plurality of paths in the first time interval, and the sequence number of the result packet is used to indicate the ranking of the result packet generated by the first network node, so that after receiving the first result packet, the second network node adjusts a congestion degree of a corresponding path based on a measurement result of the corresponding path in result packets with a same sequence number, to improve the measurement reporting precision.

With reference to the first aspect, in a possible implementation, the first result packet includes a first-type result packet and a second-type result packet, or the first result packet includes a second-type result packet. A data field in the first-type result packet indicates a first threshold, and the first threshold is used to indicate that the first network node does not generate the measurement result of the corresponding path in the first time interval. A data field in the second-type result packet indicates data of the corresponding path measured by the first network node in the first time interval.

The first result packet includes a result packet indicating that the measurement result of the corresponding path is not generated in the first time interval and a result packet of the data of the corresponding path measured in the first time interval, or the first result packet includes a result packet of the data of the corresponding path measured in the first time interval. Therefore, the first network node can simultaneously report result packets corresponding to the plurality of paths, to improve the measurement reporting precision.

With reference to the first aspect, in a possible implementation, the second result packet includes a first-type result packet and a second-type result packet; or the second result packet includes a second-type result packet.

The second result packet includes a result packet indicating that the measurement result of the corresponding path is not generated in the first time interval and a result packet of the data of the corresponding path measured in the first time interval, or the second result packet includes a result packet of the data of the corresponding path measured in the first time interval. Therefore, the first network node can simultaneously report result packets corresponding to the plurality of paths at equal time intervals, to improve the measurement reporting precision.

With reference to the first aspect, in a possible implementation, the second result packet further includes a sequence number of the result packet corresponding to the measurement result of each of the plurality of paths in the first time interval, and the sequence number of the result packet is used to indicate a ranking of the result packet generated by the first network node.

The second result packet further includes the sequence number of the result packet corresponding to the measurement result of each of the plurality of paths in the first time interval, and the sequence number of the result packet is used to indicate the ranking of the result packet generated by the first network node, so that after receiving the second result packet, the second network node adjusts a congestion degree of a corresponding path based on a measurement result of the corresponding path in result packets with a same sequence number.

With reference to the first aspect, in a possible implementation, the first time interval is less than or equal to a first time offset, and the first time offset includes an offset between time at which the first network node generates measurement result packets with a same sequence number.

The first time interval is less than the first time offset, and the first time offset is the offset between time at which the first network node generates the measurement result packets with the same sequence number. Therefore, the second network node can obtain, in the first time offset, the result packets reported by the first network node, to satisfy a measurement reporting adjustment requirement.

With reference to the first aspect, in a possible implementation, the method further includes: setting a measurement time interval of each of the plurality of paths as the first time interval.

The measurement time interval of each of the plurality of paths is set as the first time interval. Therefore, it can be ensured that the first network node reports the result packets at equal time intervals, to satisfy the measurement reporting adjustment requirement.

With reference to the first aspect, in a possible implementation, the setting a measurement time interval of each of the plurality of paths as the first time interval includes: receiving a setting packet, where the setting packet is used to indicate the measurement time interval of each of the plurality of paths, and the setting packet includes the first time interval; and setting the measurement time interval of each of the plurality of paths as the first time interval based on the setting packet.

The first network node sets the measurement time interval of each of the plurality of paths as the first time interval based on the received setting packet, so that the measurement time interval of each of the plurality of paths of the first network node can be flexibly unified.

With reference to the first aspect, in a possible implementation, the setting packet is further used to indicate a quantity of paths. The method further includes: setting, based on the setting packet, the quantity of paths measured by the first network node.

When the setting packet includes the quantity of paths, the first network node may set, based on the setting packet, the quantity of paths that need to be measured, so that the first network node subsequently measures the corresponding path.

With reference to the first aspect, in a possible implementation, the setting a measurement time interval of each of the plurality of paths to the first time interval includes: setting the measurement time interval of each of the plurality of paths as the first time interval according to a communication protocol.

The first network node sets the measurement time interval of each of the plurality of paths as the first time interval according to a specification in the communication protocol, so that signaling overheads can be reduced.

With reference to the first aspect, in a possible implementation, the method further includes: setting, according to the communication protocol, the quantity of paths measured by the first network node.

The first network node sets, according to the specification in the communication protocol, the quantity of paths measured by the first network node, so that the signaling overheads can be reduced.

With reference to the first aspect, in a possible implementation, the method further includes: sending an acknowledgment packet, where the acknowledgment packet is used to indicate that the first network node has set the measurement time interval of each of the plurality of paths and the quantity of paths.

The first network node sends the acknowledgment packet to indicate that the first network node has set the measurement time interval of each of the plurality of paths and the quantity of paths, so that a subsequent measurement operation can be performed.

According to a second aspect, a non-claimed measurement reporting method is provided. The method is performed in a communication system including a first network node and a second network node, a plurality of paths are configured for one tunnel between the first network node and the second network node, the method is applied to the second network node, and the method includes: sending a first measurement packet, where the first measurement packet is used to indicate the first network node to report measurement results; and receiving a first result packet sent by the first network node, where the first result packet includes a result packet corresponding to a measurement result of each of the plurality of paths in a first time interval, and the first result packet is used to indicate the measurement result of each of the plurality of paths in the first time interval.

The second network node sends the first measurement packet, where the first measurement packet is used to indicate measurement reporting. The second network node receives the first result packet sent by the first network node, where the first result packet is used to indicate the measurement result of each of the plurality of paths in the first time interval. Therefore, the second network node can receive the measurement results of the plurality of paths at a same moment, to improve congestion measurement precision.

With reference to the second aspect, in a possible implementation, the method further includes: receiving, at a periodicity of the first time interval, a second result packet sent by the first network node, where the second result packet includes the result packet corresponding to the measurement result of each of the plurality of paths in the first time interval, and the second result packet is used to indicate the measurement result of each of the plurality of paths in the first time interval.

The second network node receives the second result packet sent by the first network node, where the second result packet is used to indicate the measurement result of each of the plurality of paths in the first time interval. The result packet received by the second network node each time is used to indicate the measurement result of each of the plurality of paths in the first time interval, and the second network node may receive the measurement result of each of the plurality of paths in the first time interval at equal time intervals, to improve measurement reporting precision.

With reference to the second aspect, in a possible implementation, the first result packet includes a first-type result packet and a second-type result packet, or the first result packet includes a second-type result packet. A data field in the first-type result packet indicates a first threshold, and the first threshold is used to indicate that the first network node does not generate a measurement result of a corresponding path in the first time interval. A data field in the second-type result packet indicates data of the corresponding path measured by the first network node in the first time interval.

With reference to the second aspect, in a possible implementation, the first result packet further includes a sequence number of the result packet corresponding to the measurement result of each of the plurality of paths in the first time interval, and the sequence number of the result packet is used to indicate a ranking of the result packet generated by the first network node.

The first result packet further includes the sequence number of the result packet corresponding to the measurement result of each of the plurality of paths in the first time interval, and the sequence number of the result packet is used to indicate the ranking of the result packet generated by the first network node, so that after receiving the first result packet, the second network node adjusts a congestion degree of the corresponding path based on the measurement result of the corresponding path in result packets with a same sequence number, to improve the measurement reporting precision.

With reference to the second aspect, in a possible implementation, the second result packet includes a first-type result packet and a second-type result packet; or the second result packet includes a second-type result packet.

With reference to the second aspect, in a possible implementation, the second result packet further includes a sequence number of the result packet corresponding to the measurement result of each of the plurality of paths in the first time interval, and the sequence number of the result packet is used to indicate a ranking of the result packet generated by the first network node.

The second result packet further includes the sequence number of the result packet corresponding to the measurement result of each of the plurality of paths in the first time interval, and the sequence number of the result packet is used to indicate the ranking of the result packet generated by the first network node, so that after receiving the second result packet, the second network node adjusts a congestion degree of the corresponding path based on the measurement result of the corresponding path in result packets with a same sequence number, to improve the measurement reporting precision.

With reference to the second aspect, in a possible implementation, the first time interval is less than or equal to a first time offset, and the first time offset includes an offset between time at which the first network node generates measurement result packets with a same sequence number.

With reference to the second aspect, in a possible implementation, the method further includes: sending a setting packet, where the setting packet is used to indicate a measurement time interval of each of the plurality of paths, and the setting packet includes the first time interval.

With reference to the second aspect, in a possible implementation, the setting packet is further used to indicate a quantity of paths.

With reference to the second aspect, in a possible implementation, the method further includes: receiving an acknowledgment packet, where the acknowledgment packet is used to indicate that the first network node has set the measurement time interval of each of the plurality of paths and the quantity of paths.

According to a third aspect, a first network node is provided. A network includes the first network node and a second network node, a plurality of paths are configured for one tunnel between the first network node and the second network node. The first network node includes: a receiving module, configured to receive from the second network node measurement packets on the plurality of paths, wherein the measurement packets comprise a first measurement packet, wherein the first measurement packet is used to indicate the network node to report measurement results, wherein the first measurement packet is a measurement packet first received by the first network node on the plurality of paths; and a sending module, configured to send a first result packet to the second network node, where the first result packet includes a result packet corresponding to a measurement result of each of the plurality of paths in a first time interval, and the first result packet is used to indicate the measurement result of each of the plurality of paths in the first time interval.

With reference to the third aspect, in a possible implementation, the sending module is further configured to: send a second result packet to the second network node at a periodicity of the first time interval, where the second result packet includes the result packet corresponding to the measurement result of each of the plurality of paths in the first time interval, and the second result packet is used to indicate the measurement result of each of the plurality of paths in the first time interval.

With reference to the third aspect, in a possible implementation, the first result packet includes a first-type result packet and a second-type result packet, or the first result packet includes a second-type result packet. A data field in the first-type result packet indicates a first threshold, and the first threshold is used to indicate that the first network node does not generate a measurement result of a corresponding path in the first time interval. A data field in the second-type result packet indicates data of the corresponding path measured by the first network node in the first time interval.

With reference to the third aspect, in a possible implementation, the first result packet further includes a sequence number of the result packet corresponding to the measurement result of each of the plurality of paths in the first time interval, and the sequence number of the result packet is used to indicate a ranking of the result packet generated by the first network node.

With reference to the third aspect, in a possible implementation, the second result packet includes a first-type result packet and a second-type result packet; or the second result packet includes a second-type result packet.

With reference to the third aspect, in a possible implementation, the second result packet further includes a sequence number of the result packet corresponding to the measurement result of each of the plurality of paths in the first time interval, and the sequence number of the result packet is used to indicate a ranking of the result packet generated by the first network node.

With reference to the third aspect, in a possible implementation, the first time interval is less than or equal to a first time offset, and the first time offset includes an offset between time at which the network node generates measurement result packets with a same sequence number.

With reference to the third aspect, in a possible implementation, the network node further includes a processing module, where the processing module is configured to set a measurement time interval of each of the plurality of paths as the first time interval.

With reference to the third aspect, in a possible implementation, the network node further includes the processing module. The receiving module is further specifically configured to receive a setting packet, where the setting packet is used to indicate the measurement time interval of each of the plurality of paths, and the setting packet includes the first time interval. The processing module is further specifically configured to set the measurement time interval of each of the plurality of paths as the first time interval based on the setting packet.

With reference to the third aspect, in a possible implementation, the setting packet is further used to indicate a quantity of paths. The processing module is further specifically configured to set, based on the setting packet, the quantity of paths measured by the network node.

With reference to the third aspect, in a possible implementation, the processing module is further specifically configured to set the measurement time interval of each of the plurality of paths as the first time interval according to a communication protocol.

With reference to the third aspect, in a possible implementation, the processing module is further specifically configured to set, according to the communication protocol, the quantity of paths measured by the network node.

With reference to the third aspect, in a possible implementation, the sending module is further configured to send an acknowledgment packet, where the acknowledgment packet is used to indicate that the network node has set the measurement time interval of each of the plurality of paths and the quantity of paths.

According to a fourth aspect, a non-claimed second network node is provided. The network node includes a first network node and the second network node, a plurality of paths are configured for one tunnel between the first network node and the second network node. The network node includes a sending module, configured to send a first measurement packet, where the first measurement packet is used to indicate the first network node to report measurement results; and a receiving module, configured to receive a first result packet sent by the first network node, where the first result packet includes a result packet corresponding to a measurement result of each of the plurality of paths in a first time interval, and the first result packet is used to indicate the measurement result of each of the plurality of paths in the first time interval.

With reference to the fourth aspect, in a possible implementation, the receiving module is further configured to: receive, at a periodicity of the first time interval, a second result packet sent by the first network node, where the second result packet includes the result packet corresponding to the measurement result of each of the plurality of paths in the first time interval, and the second result packet is used to indicate the measurement result of each of the plurality of paths in the first time interval.

With reference to the fourth aspect, in a possible implementation, the first result packet includes a first-type result packet and a second-type result packet, or the first result packet includes a second-type result packet. A data field in the first-type result packet indicates a first threshold, and the first threshold is used to indicate that the first network node does not generate a measurement result of a corresponding path in the first time interval. A data field in the second-type result packet indicates data of the corresponding path measured by the first network node in the first time interval.

With reference to the fourth aspect, in a possible implementation, the first result packet further includes a sequence number of the result packet corresponding to the measurement result of each of the plurality of paths in the first time interval, and the sequence number of the result packet is used to indicate a ranking of the result packet generated by the first network node.

With reference to the fourth aspect, in a possible implementation, the second result packet includes a first-type result packet and a second-type result packet; or the second result packet includes a second-type result packet.

With reference to the fourth aspect, in a possible implementation, the second result packet further includes a sequence number of the result packet corresponding to the measurement result of each of the plurality of paths in the first time interval, and the sequence number of the result packet is used to indicate a ranking of the result packet generated by the first network node.

With reference to the fourth aspect, in a possible implementation, the first time interval is less than or equal to a first time offset, and the first time offset includes an offset between time at which the first network node generates measurement result packets with a same sequence number.

With reference to the fourth aspect, in a possible implementation, the sending module is further configured to send a setting packet, where the setting packet is used to indicate a measurement time interval of each of the plurality of paths, and the setting packet includes the first time interval.

With reference to the fourth aspect, in a possible implementation, when a measurement parameter further includes a quantity of paths, the setting packet further includes the quantity of paths.

With reference to the fourth aspect, in a possible implementation, the receiving module is further configured to receive an acknowledgment packet, where the acknowledgment packet is used to indicate that the first network node has set the measurement time interval of each of the plurality of paths and the quantity of paths.

According to a fifth aspect, a non-claimed network node is provided. The network node includes a transceiver, a processor, and a memory. The processor is configured to control the transceiver to send and receive a signal. The memory is configured to store a computer program. The processor is configured to invoke the computer program from the memory and run the computer program, so that the network node performs the method according to any one of the first aspect or the possible implementations of the first aspect.

In a design, the network node is a communication chip, the receiving module may be an input circuit or an interface of the communication chip, and the sending module may be an output circuit or an interface of the communication chip.

According to a sixth aspect, a non-claimed network node is provided. The network node includes a transceiver, a processor, and a memory. The processor is configured to control the transceiver to send and receive a signal. The memory is configured to store a computer program. The processor is configured to invoke the computer program from the memory and run the computer program, so that the network node performs the method according to any one of the second aspect or the possible implementations of the second aspect.

In a design, the network node is a communication chip, the receiving module may be an input circuit or an interface of the communication chip, and the sending module may be an output circuit or an interface of the communication chip.

According to a seventh aspect, a network system is provided. The network system includes the first network node according to any one of the third aspect or the possible implementations of the third aspect and a second network node.

According to an eighth aspect, a non-claimed computer program product including instructions is provided. When the computer program product runs on a computer, the computer is enabled to perform the methods according to the foregoing aspects.

According to a ninth aspect, a non-claimed computer-readable storage medium is provided. The computer-readable storage medium stores instructions. When the instructions are run on a computer, the computer is enabled to perform the methods according to the foregoing aspects.

### BRIEF DESCRIPTION OF DRAWINGS

FIG. 1 is a schematic diagram of SRv6 packet forwarding;
FIG. 2 is a schematic diagram of a moment of sending a packet on a single path between two network nodes;
FIG. 3 is a schematic flowchart of a measurement reporting method 300 according to an embodiment of this application;
FIG. 4 shows a form of a setting packet according to an embodiment of this application;
FIG. 5 shows a form of an acknowledgment packet according to an embodiment of this application;
FIG. 6 shows a form of a measurement packet according to an embodiment of this application;
FIG. 7 shows a form of a result packet according to an embodiment of this application;
FIG. 8 is a schematic diagram of a moment of generating a measurement result of each path according to an embodiment of this application;
FIG. 9 is a schematic block diagram of a network node according to an embodiment of this application;
FIG. 10 is another schematic block diagram of a network node according to an embodiment of this application;
FIG. 11 is a schematic block diagram of a network node according to an embodiment of this application;
FIG. 12 is another schematic block diagram of a network node according to an embodiment of this application; and
FIG. 13 is a schematic block diagram of a network system according to an embodiment of this application.

### DESCRIPTION OF EMBODIMENTS

For ease of understanding embodiments of this application, the following several descriptions are provided before the embodiments of this application are described.

First, in the embodiments of this application, an "indication" may include a direct indication and an indirect indication, or may include an explicit indication and an implicit indication. Information indicated by a piece of information (for example, first indication information described below) is referred to as to-be-indicated information. In a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information may be known, or agreed upon in advance. For example, specific information may also be indicated by using a pre-agreed (for example, stipulated in a protocol) arrangement sequence of various pieces of information, to reduce indication overheads to some extent.

Second, in the embodiments shown below, "first", "second", and various numerical numbers are merely used for distinguishing for ease of description, and are not used to limit the scope of the embodiments of this application, for example, used for distinguishing different packets.

Third, a "protocol" in the embodiments of this application may be a standard protocol in the communication field, for example, may include an LTE protocol, an NR protocol, and a related protocol used in a future communication system. This is not limited in this application.

Fourth, "a plurality of" in the embodiments of this application means two or more. "One or more of the following items (pieces)" or a similar expression thereof refers to any combination of these items, including any combination of singular items (pieces) or plural items (pieces). For example, at least one (piece) or a plurality (pieces) of a, b, or c may indicate: a, b, c, a and b, a and c, b and c, or a, b, and c, where a, b, and c may be singular or plural.

Fifth, a "moment" in the embodiments of this application is at least accurate to millisecond, that is, the "moment" may be YYYY-MM-DD hh:mm:ss.ms, for example, 2018-08-29 09:30:18.11. The "moment" may alternatively be YYYY-MM-DD hh:mm:ss.ms.microseconds, for example, 2019-03-05 10:15:09.05.10.

The following describes the technical solutions of this application with reference to the accompanying drawings.

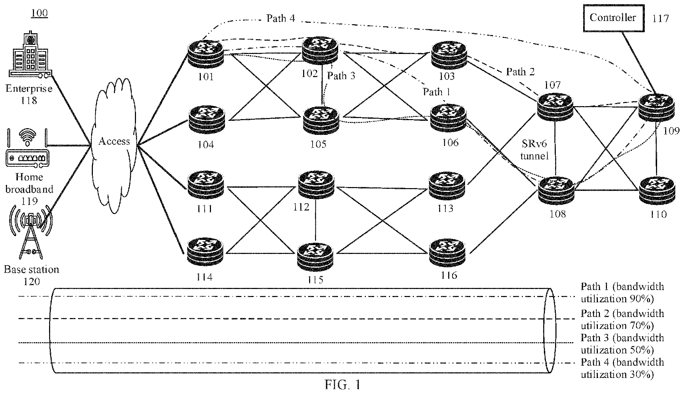

FIG. 1 is a schematic diagram of SRv6 packet forwarding. A network 100 shown in FIG. 1 includes a node 101 to a node 116, a controller 117, an enterprise 118, home broadband 119, and a base station 120. The node may be a router device. The enterprise 118, the home broadband 119, and the base station 120 are connected to corresponding nodes to implement packet forwarding. A tunnel between the node 101 and the node 109 includes at least four paths, for example, a path 1, a path 2, a path 3, and a path 4, as shown in FIG. 1. The path 1 is 101→102→106→108→109, the path 2 is 101→102→103→107→109, the path 3 is 101→102→105→106→108→109, and the path 4 is 101→109. If bandwidth utilization of the path 1 is 90%, bandwidth utilization of the path 2 is 70%, bandwidth utilization of the path 3 is 50%, and bandwidth utilization of the path 4 is 30%, average network utilization of the tunnel is 60%, but load of the tunnel is limited by a path with the highest bandwidth utilization, namely, the path 1.

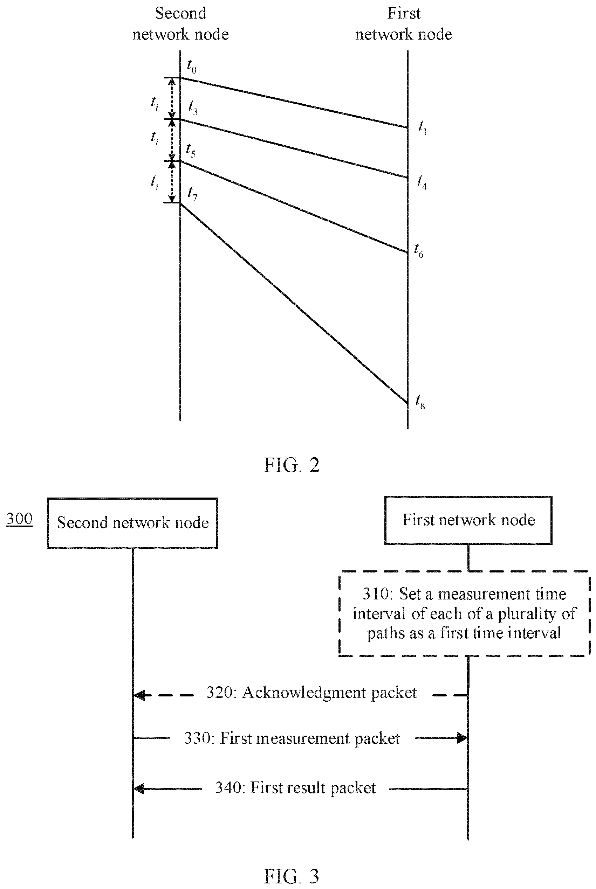

FIG. 2 is a schematic diagram of a moment of sending a packet on a single path between two network nodes. A second network node may be a source end (which may be understood as a transmit end), and a first network node may be a sink end (which may be understood as a receive end). The second network node sends a measurement packet at small equal intervals *tᵢ*. As shown in FIG. 2, the second network node continuously sends the measurement packet to the first network node at equal intervals *tᵢ*. To be specific, the second network node sends the measurement packet for the first time at a moment *t*₀, the second network node sends the measurement packet for the second time at a moment *t*₃, the second network node sends the measurement packet for the third time at a moment *t*₅, the second network node sends the measurement packet for the fourth time at a moment *t*₇, and a time interval between *t*₀ and *t*₃, a time interval between *t*₃ and *t*₅, and a time interval between *t*₅ and *t*₇ are equal. The first network node receives the measurement packet for the first time at a moment *t*₁ and generates a result packet corresponding to a first measurement packet for the first time in a time interval between *t*₁ and *t*₄, the first network node receives the measurement packet for the second time at the moment *t*₄ and generates a result packet corresponding to a second measurement packet for the second time in a time interval between *t*₄ and *t*₆, and the first network node receives the measurement packet for the third time at the moment *t*₆ and generates a result packet corresponding to a third measurement packet for the third time in a time interval between *t*₆ and *t*₈. The second network node sends the measurement packet at equal intervals. Because a congestion status of each path constantly changes, time required for the measurement packet to arrive at the first network node is different. As a result, the first network node does not obtain a measurement result at equal intervals, that is, the time interval between *t*₁ and *t*₄, the time interval between *t*₄ and *t*₆, and the time interval between *t*₆ and *t*₈ may be unequal. When a plurality of paths are configured for one tunnel between the first network node and the second network node, time at which the first network node generates a measurement result of each path is different. Consequently, the second network node cannot adjust a congestion degree of a corresponding path based on the measurement result of each path.

Therefore, a method for improving measurement packet reporting precision urgently needs to be provided.

The method provided in the embodiments of this application is described in detail below with reference to the accompanying drawings.

In the embodiments shown below, optionally, the first network node and the second network node may be router devices. The first network node may be a sink end (receive end), and the second network node may be a source end (transmit end).

The method is performed in a communication system including the first network node and the second network node, and a plurality of paths are configured for one tunnel between the first network node and the second network node.

The second network node continuously sends a measurement packet to the first network node on each of the plurality of paths at a periodicity of a first time interval. After receiving the measurement packet on each of the plurality of paths, the first network node generates a measurement result of each of the plurality of paths at a periodicity of the first time interval.

The following describes in detail the embodiments of this application by using interaction between the first network node and the second network node as an example. FIG. 3 is a schematic flowchart of a measurement reporting method 300 according to an embodiment of this application from the perspective of interaction between a first network node and a second network node. As shown in FIG. 3, the method 300 may include step 310 to step 340. The following describes the steps in the method 300 in detail.

Step 310: The first network node sets a measurement time interval of each of a plurality of paths as a first time interval.

The first network node may set the measurement time interval of each of the plurality of paths in the following two manners.

### Manner 1

The first network node receives a setting packet sent by the second network node, where the setting packet is used to indicate the measurement time interval of each of the plurality of paths, and the setting packet includes the first time interval.

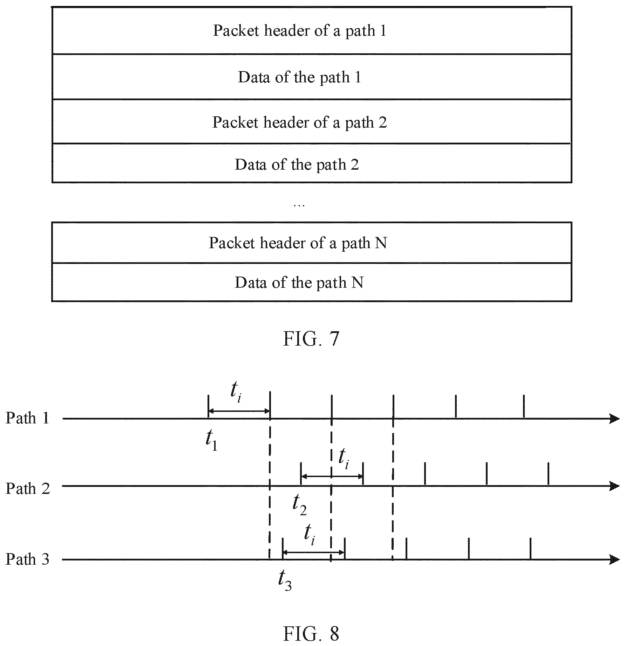

Optionally, that the measurement time interval of each of the plurality of paths is the first time interval may be understood as that measurement time intervals of the plurality of paths are a same time interval. For example, as shown in FIG. 8, the first network node receives, at a moment *t*₁, the 1^{st} measurement packet sent by the second network node on a path 1. In this case, the first network node continuously performs result measurement at the first time interval *tᵢ* by using the moment *t*₁ as a start moment. The first network node receives, at a moment *t*₂, the 1^{st} measurement packet sent by the second network node on a path 2. In this case, the first network node continuously performs result measurement at the first time interval *tᵢ* by using the moment *t*₂ as a start moment. The first network node receives, at a moment *t*₃, the 1^{st} measurement packet sent by the second network node on a path 3. In this case, the first network node continuously performs result measurement at the first time interval *tᵢ* by using the moment *t*₃ as a start moment.

The first network node sets the measurement time interval of each of the plurality of paths as the first time interval based on the setting packet. For example, when the first time interval in the setting packet may be 1 ms, the first network node sets the measurement time interval of each of the plurality of paths as 1 ms based on the first time interval in the setting packet. For another example, when the first time interval in the setting packet may be 2 ms, the first network node sets the measurement time interval of each of the plurality of paths as 2 ms based on the first time interval in the setting packet.

Optionally, the setting packet may be further used to indicate a quantity of paths, and the first network node sets the quantity of paths based on the setting packet.

Optionally, the measurement time interval of each of the plurality of paths and the quantity of paths may be indicated by using one setting packet. Alternatively, the measurement time interval of each of the plurality of paths and the quantity of paths may be indicated by using two setting packets. This application sets no limitation on whether the measurement time interval of each of the plurality of paths and the quantity of paths in measurement parameters are indicated by using one setting packet or two setting packets.

Optionally, the first network node sets, based on the setting packet, a quantity of paths measured by the first network node. For example, when the quantity of paths indicated by using the setting packet may be 4, the first network node sets, based on the quantity of paths in the setting packet, the quantity of paths that need to be measured by the first network node as 4. For another example, when the quantity of paths in the setting packet may be 6, the first network node sets, based on the quantity of paths in the setting packet, the quantity of paths that need to be measured by the first network node as 6. This application sets no limitation on the quantity of paths in the setting packet.

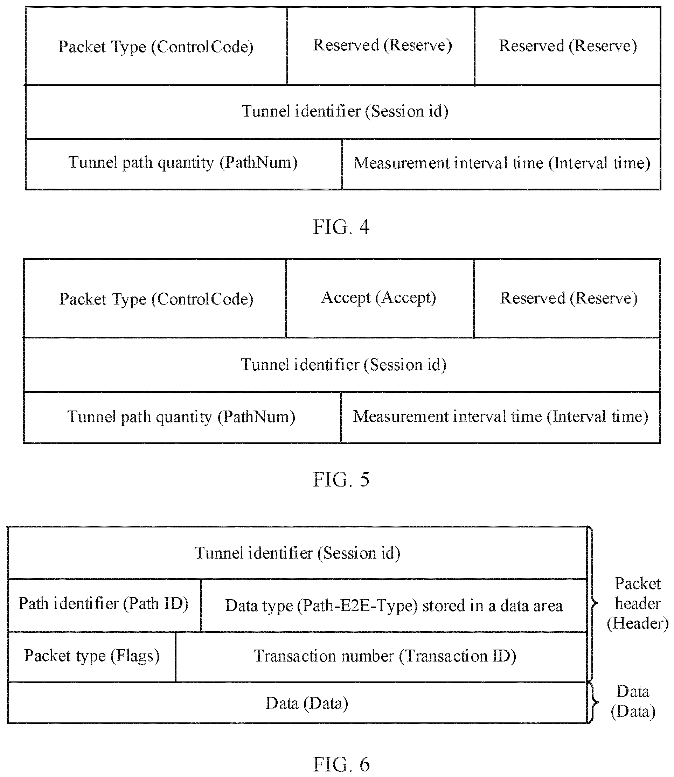

For example, FIG. 4 may show a form of a setting packet. The setting packet may include a packet type (ControlCode) field, a tunnel identifier (Session id) field, a tunnel path quantity (PathNum) field, and a measurement interval time (Interval time) field. In the packet type field, when the packet type field indicates 0, the packet is a setting packet; when the packet type field indicates 1, the packet is an acknowledgment packet. The tunnel identifier field indicates an identifier of a tunnel that needs to be measured. One tunnel identifier is allocated to one tunnel, and the tunnel identifier may occupy 32 bits. The tunnel path quantity field is used to indicate a quantity of paths that need to be measured for the tunnel, and the tunnel path quantity field may occupy 16 bits. The measurement interval time field indicates a time interval (for example, the first time interval) at which the first network node performs result measurement, the measurement interval time may occupy 16 bits, and a unit of the measurement interval time is a millisecond (ms). The packet type field indicates 0. The setting packet may further include two reserved (Reserved) fields.

Optionally, the time interval of the result measurement indicated by the measurement interval time field may be understood as that the measurement time interval of each of the plurality of paths is set as the first time interval.

Optionally, the quantity of paths indicated by the tunnel path quantity field may be understood as the quantity of paths that need to be measured by the first network node.

### Manner 2

A communication protocol specifies the measurement time interval of each of the plurality of paths and a quantity of paths.

Optionally, the communication protocol specifies that the measurement time interval of each of the plurality of paths is the first time interval. The first time interval may be 3 ms, or the first time interval may be 2 ms.

Optionally, the first network node sets the measurement time interval of each of the plurality of paths as the first time interval according to the specification in the communication protocol. For example, when the first time interval specified in the communication protocol may be 3 ms, the first network node sets the measurement time interval of each of the plurality of paths as 3 ms based on the first time interval specified in the communication protocol. For another example, when the first time interval specified in the communication protocol may be 2 ms, the first network node sets the measurement time interval of each of the plurality of paths as 2 ms based on the first time interval specified in the communication protocol.

Optionally, the communication protocol may further specify the quantity of paths, that is, the communication protocol specifies the quantity of paths that need to be measured by the first network node. The quantity of paths may be 3, or the quantity of paths may be 4.

Optionally, the first network node sets, according to the specification in the communication protocol, the quantity of paths that need to be measured by the first network node. For example, when the quantity, specified in the communication protocol, of paths that need to be measured by the first network node may be 3, the first network node sets, based on the quantity, specified in the communication protocol, of paths that need to be measured by the first network node, the quantity of paths that need to be measured by the first network node as 3. For another example, when the quantity, specified in the communication protocol, of paths that need to be measured by the first network node may be 4, the first network node sets, based on the quantity, specified in the communication protocol, of paths that need to be measured by the first network node, the quantity of paths that need to be measured by the first network node as 4.

After the first network node sets the measurement time interval of each of the plurality of paths and the quantity of paths that need to be measured by the first network node, step 320 may be performed.

Step 320: The second network node receives an acknowledgment packet sent by the first network node, where the acknowledgment packet is used to indicate that the first network node has set the measurement time interval of each of the plurality of paths and the quantity of paths that need to be measured by the first network node.

For example, FIG. 5 may show a form of an acknowledgment packet. The acknowledgment packet may also include a packet type field, a tunnel identifier field, a tunnel path quantity field, a measurement interval time field, and an accept (Accept) field. The acknowledgment packet may further include a reserved field. The accept field is used to indicate a setting result part in the acknowledgment packet. If the first network node successfully performs setting based on the acknowledgment packet, the accept field indicates 0. If the first network node fails to perform setting based on the acknowledgment packet, the accept field indicates 1. The packet type field indicates 1.

When the first network node successfully performs setting based on the acknowledgment packet, and the accept field in the acknowledgment packet indicates 0, step 330 is performed.

Step 330: The second network node sends a first measurement packet, where the first measurement packet is used to indicate the first network node to report measurement results. Correspondingly, the first network node receives the first measurement packet.

Optionally, the first measurement packet is sent by the second network node to the first network node on one of the plurality of paths.

Optionally, in addition to sending the first measurement packet, the second network node may further send a measurement packet of each of the plurality of paths to the first network node at a periodicity of the first time interval. For example, four paths are configured between the first network node and the second network node, that is, a path 1, a path 2, a path 3, and a path 4. The second network node correspondingly sends measurement packets to the first network node on the path 1, the path 2, the path 3, and the path 4 at the first time interval.

The first measurement packet is a measurement packet first received by the first network node on the plurality of paths. That is, the first measurement packet is understood as a measurement packet first received by the first network node in measurement packets sent by the second network node on the plurality of paths. For example, the second network node correspondingly sends the measurement packets to the first network node on the path 1, the path 2, the path 3, and the path 4 at the first time interval. If the first network node first receives a measurement packet sent on the path 1, the first measurement packet is the measurement packet sent on the path 1. If the first network node first receives a measurement packet sent on the path 3, the first measurement packet is the measurement packet sent on the path 3.

Optionally, a moment at which the second network node sends the first measurement packet is different from a moment at which the first network node receives the first measurement packet, and the moment at which the second network node sends the first measurement packet is earlier than the moment at which the first network node receives the first measurement packet. For example, the second network node sends the first measurement packet at a moment of 1 ms, and the first network node receives the first measurement packet at a moment of 2 ms. For example, the second network node sends the first measurement packet at a moment of 1 ms, and the first network node receives the first measurement packet at a moment of 1.8 ms.

For example, FIG. 6 shows a form of a measurement packet. The measurement packet may include two parts: a packet header (Header) and data (Data). The packet header may include a tunnel identifier field, a path identifier (Path ID) field, a field of a data type (Path-E2E-Type) stored in a data area, a packet type (Flags) field, and a transaction number (Transaction ID) field. The tunnel identifier field is used to indicate an identifier of a tunnel measured by the first network node. The path identifier is used to indicate an identifier of one of a plurality of physical paths of one tunnel measured by the first network node. For example, data stored in the data area may be a timestamp and/or a quantity of packets. The timestamp may be indicated by using a bit 0, and the timestamp may be understood as two moments, namely, a start moment and an end moment. The quantity of packets may be indicated by using a bit 1. The quantity of packets may be a quantity of packets between the start moment and the end moment. The field of the data type stored in the data area may store a plurality of fields. In the packet type (Flags) field, when the packet type field is indicated by using the bit 0, a type of the packet is a measurement packet; when the packet type field is indicated by using the bit 1, a type of the packet is a result packet; other fields are reserved temporarily. A transaction number is generated during each measurement. The transaction number may be understood as a sequence number of measurement. The data part includes a data type indicated by the data type stored in the data area, and may be a timestamp and/or a quantity of packets, that is, may be a start moment, an end moment, and/or a quantity of packets between the start moment and the end moment.

For example, the first network node may receive the first measurement packet at a first moment. If four paths are configured between the second network node and the first network node, when the first measurement packet is a measurement packet sent by the first network node on the path 2, the first moment may be a moment at which the first network node receives the measurement packet sent by the second network node on the path 2. If the moment at which the first network node receives the measurement packet sent by the second network node on the path 2 is 8:10, the first moment is 8:10. For another example, when the first measurement packet is a measurement packet sent by the first network node on the path 4, the first moment may be a moment at which the first network node receives the measurement packet sent by the second network node on the path 4. If the moment at which the first network node receives the measurement packet sent by the second network node on the path 4 is 8:30, the first moment is 8:30.

Step 340: The first network node sends a first result packet to the second network node, where the first result packet includes a result packet corresponding to a measurement result of each of the plurality of paths in the first time interval, and the first result packet is used to indicate the measurement result of each of the plurality of paths in the first time interval. Correspondingly, the second network node receives the first result packet sent by the first network node.

For example, the first network node may send the first result packet to the second network node at a second moment. A time interval between the first moment and the second moment may be the first time interval, that is, the first network node receives the first measurement packet at the first moment, and does not send the result packet at the first moment, but sends the first result packet to the second network node at the first moment plus an end moment of the first time interval. For example, as shown in FIG. 8, the first network node receives, at the moment *t*₁, the 1^{st} measurement packet sent by the second network node on the path 1. In this case, the first network node continuously performs result measurement at the first time interval *tᵢ* by using the moment *t*₁ as the start moment. The first network node receives, at the moment *t*₂, the 1^{st} measurement packet sent by the second network node on the path 2. In this case, the first network node continuously performs result measurement at the first time interval *tᵢ* by using the moment *t*₂ as the start moment. The first network node receives, at the moment *t*₃, the 1^{st} measurement packet sent by the second network node on the path 3. In this case, the first network node continuously performs result measurement at the first time interval *tᵢ* by using the moment *t*₃ as the start moment. The first measurement packet is the 1^{st} measurement packet that is sent by the second network node on the path 1 and that is received by the first network node at the moment *t*₁, and the first moment is the moment *t*₁. The first network node sends the first result packet to the second network node at a moment *t*₁ *+ tᵢ*, that is, the second moment is the moment *t*₁ *+ tᵢ.*

Optionally, the first result packet may further include a sequence number of the result packet corresponding to the measurement result of each of the plurality of paths in the first time interval, and the sequence number of the result packet is used to indicate a ranking of the result packet generated by the first network node.

Optionally, the sequence number of the result packet corresponding to the measurement result may be understood as a sequence number of measurement performed by the first network node on a corresponding path to obtain a measurement result of the result packet. Optionally, the first time interval is less than or equal to a first time offset, and the first time offset includes an offset between time at which the first network node generates measurement result packets with a same sequence number.

The same sequence number may be understood as a same transaction number.

The offset between the time at which the first network node generates the measurement result packets with the same sequence number may be understood as an offset between time at which the first network node generates measurement result packets with a same sequence number for different paths. For example, three paths (for example, the path 1, the path 2, and the path 3) are configured between the first network node and the second network node. For the three paths, details are as follows: If the first network node receives the first measurement packet at 1 ms, and the first measurement packet is sent on the path 1, the first network node generates a measurement result packet corresponding to the path 1 for the first time at 1.1 ms. If the first network node receives the 1^{st} measurement packet corresponding to the path 3 at 2 ms, the first network node generates a measurement result packet corresponding to the path 3 for the first time at 2.1 ms. If the first network node receives the 1^{st} measurement packet corresponding to the path 2 at 3 ms, the first network node generates a measurement result packet corresponding to the path 2 for the first time at 3.1 ms. The first time offset may be an offset between time at which the measurement result packet corresponding to the path 1 is generated for the first time, time at which the measurement result packet corresponding to the path 2 is generated for the first time, and time at which the measurement result packet corresponding to the path 3 is generated for the first time. That is, the first time offset may be 2 ms.

For example, if the first time offset is 2 ms, the first time interval needs to be less than or equal to 2 ms. To be specific, if the second network node sends a measurement packet corresponding to one path every 2 ms at most, the first network node generates a measurement result packet corresponding to one path every 2 ms at most. For another example, if the first time offset is 1.5 ms, the first time interval needs to be less than or equal to 1.5 ms. To be specific, if the second network node sends a measurement packet corresponding to one path every 1.5 ms at most, the first network node generates a measurement result packet corresponding to one path every 1.5 ms at most.

Optionally, the first network node sends a second result packet to the second network node at a periodicity of the first time interval, where the second result packet includes a result packet corresponding to a measurement result of each of the plurality of paths in the first time interval, and the second result packet is used to indicate the measurement result of each of the plurality of paths in the first time interval. Correspondingly, the second network node receives, at a periodicity of the first time interval, the second result packet sent by the first network node.

Optionally, the second result packet may further include a sequence number of the result packet corresponding to the measurement result of each of the plurality of paths in the first time interval, and the sequence number of the result packet is used to indicate a ranking of the result packet generated by the first network node.

Optionally, the sequence number of the result packet corresponding to the measurement result may be understood as a sequence number of measurement performed by the first network node on a corresponding path to obtain a measurement result of the result packet.

Optionally, the first network node receives the first measurement packet at the first moment, and does not send the second result packet at the first moment plus an end moment of the first time interval, but periodically sends the second result packet to the second network node at the first moment plus an end moment of N first time intervals, where N is greater than or equal to 2. For example, as shown in FIG. 8, the first network node receives, at the moment *t*₁, the 1^{st} measurement packet sent by the second network node on the path 1. In this case, the first network node continuously performs result measurement at the first time interval *tᵢ* by using the moment *t*₁ as the start moment. The first network node receives, at the moment *t*₂, the 1^{st} measurement packet sent by the second network node on the path 2. In this case, the first network node continuously performs result measurement at the first time interval *tᵢ* by using the moment *t*₂ as the start moment. The first network node receives, at the moment *t*₃, the 1^{st} measurement packet sent by the second network node on the path 3. In this case, the first network node continuously performs result measurement at the first time interval *tᵢ* by using the moment *t*₃ as the start moment. The first measurement packet is the 1^{st} measurement packet that is sent by the second network node on the path 1 and that is received by the first network node at the moment *t*₁, and the first moment is the moment *t*₁. The first network node periodically sends the second result packet to the second network node at a moment *t*₁ *+ Ntᵢ*, where N is greater than or equal to 2.

The offset between the time at which the first network node generates the measurement result packets with the same sequence number may be understood as an offset between time at which the first network node generates the measurement result packets with a same sequence number for different paths. For example, three paths (for example, the path 1, the path 2, and the path 3) are configured between the first network node and the second network node. For the three paths, details are as follows: If the first network node receives the first measurement packet at 1 ms, and the first measurement packet is sent on the path 1, the first network node generates the measurement result packet corresponding to the path 1 for the first time at 1.1 ms and generates the measurement result packet corresponding to the path 1 for the second time at 1.2 ms. If the first network node receives the 1^{st} measurement packet corresponding to the path 3 at 2 ms, the first network node generates the measurement result packet corresponding to the path 3 for the first time at 2.1 ms and generates the measurement result packet corresponding to the path 3 for the second time at 2.2 ms. If the first network node receives the 1^{st} measurement packet corresponding to the path 2 at 3 ms, the first network node generates the measurement result packet corresponding to the path 2 for the first time at 3.1 ms and generates the measurement result packet corresponding to the path 2 for the second time at 3.2 ms. The first time offset may be an offset between time at which the measurement result packet corresponding to the path 1 is generated for the first time, time at which the measurement result packet corresponding to the path 2 is generated for the first time, and time at which the measurement result packet corresponding to the path 3 is generated for the first time. The first time offset may alternatively be an offset between time at which the measurement result packet corresponding to the path 1 is generated for the second time, time at which the measurement result packet corresponding to the path 2 is generated for the second time, and time at which the measurement result packet corresponding to the path 3 is generated for the second time. That is, the first time offset may be 2 ms.

For example, FIG. 7 shows a form of a result packet, and the result packet includes the measurement result of each of the plurality of paths. For example, M paths are configured between the second network node and the first network node, and M is a positive integer. In this case, the result packet includes M measurement result packets, one measurement result packet corresponds to one path, and a form of the measurement result packet of each path may be shown in FIG. 6. A packet type is indicated by using the bit 1, that is, the bit 1 indicates that the packet is a result packet.

Optionally, the first result packet includes a first-type result packet and a second-type result packet, or the first result packet includes a second-type result packet. A data field in the first-type result packet indicates a first threshold, and the first threshold is used to indicate that the first network node does not generate a measurement result of a corresponding path in the first time interval. A data field in the second-type result packet indicates data of the corresponding path measured by the first network node in the first time interval.

Optionally, the second result packet includes a first-type result packet and a second-type result packet, or the second result packet includes a second-type result packet. A data field in the first-type result packet indicates a first threshold, and the first threshold is used to indicate that the first network node does not generate a measurement result of a corresponding path in the first time interval. A data field in the second-type result packet indicates data of the corresponding path measured by the first network node in the first time interval.

The first-type result packet may be understood as that the first network node does not generate a measurement result of a corresponding path in a corresponding time interval, and the data field in the first-type result packet indicates the first threshold. The second-type result packet may be understood as that the first network node generates a measurement result of a corresponding path in a corresponding time interval, and the data field in the second-type result packet indicates the data of the corresponding path measured by the first network node in the first time interval.

Optionally, the first threshold may be 0.

When the first threshold is 0, if the data field in the result packet indicates 0, the first network node does not generate the measurement result of the corresponding path in the corresponding time interval; if the data field in the result packet indicates other data, the first network node generates the measurement result of the corresponding path in the corresponding time interval. For example, as shown in FIG. 8, the first network node receives, at the moment *t*₁, the 1^{st} measurement packet sent by the second network node on the path 1, the first network node receives, at the moment *t*₂, the 1^{st} measurement packet sent by the second network node on the path 2, and the first network node receives, at the moment *t*₃, the 1^{st} measurement packet sent by the second network node on the path 3, where *t*₁ *< t*₃ *< t*₂. In this case, the first network node generates the 1^{st} result packet corresponding to the path 1 in a period between *t*₁ and *t*₁ *+ tᵢ*, and measurement results of the path 2 and the path 3 are not generated at the moment *t*₁ *+ tᵢ.* A data field in the result packet corresponding to the path 1 indicates data that has been measured on the path 1, that is, the 1^{st} result packet corresponding to the path is the second-type result packet. Data fields in the result packet corresponding to the path 2 and the result packet corresponding to the path 3 indicate 0, that is, the result packet corresponding to the path 2 and the result packet corresponding to the path 3 are both first-type result packets. For another example, the first network node generates the 3^{rd} result packet corresponding to the path 1 in a period between *t*₁ *+* 2*tᵢ* and *t*₁ + 3*tᵢ*, and further generates the 1^{st} result packet corresponding to the path 2 and the 1^{st} result packet corresponding to the path 3 at the same time. In this case, a data field in the 3^{rd} result packet corresponding to the path 1 indicates data that has been measured on the path 1, a data field in the 1^{st} result packet corresponding to the path 2 indicates data that has been measured on the path 2, and a data field in the 1^{st} result packet corresponding to the path 3 indicates data that has been measured on the path 3. That is, the 3^{rd} result packet corresponding to the path 1, the 1^{st} result packet corresponding to the path 2, and the 1^{st} result packet corresponding to the path 3 are all second-type result packets.

Optionally, in the method 300, step 350 may be further performed.

Step 350: The second network node adjusts bandwidth utilization of each path based on the result packet.

The second network node extracts, based on the result packet, the measurement result that is of each of the plurality of paths and that is in the result packets with the same sequence number. When measurement results corresponding to at least two of the plurality of paths include measurement data, the second network node adjusts bandwidth utilization of a corresponding path based on the measurement results corresponding to the at least two of the plurality of paths.

For example, as shown in FIG. 8, three paths are configured between the second network node and the first network node. The first network node receives, at the moment *t*₁, the 1^{st} measurement packet sent by the second network node on the path 1. In this case, the first network node continuously performs result measurement at the first time interval *tᵢ* by using the moment *t*₁ as the start moment. The first network node receives, at the moment *t*₂, the 1^{st} measurement packet sent by the second network node on the path 2. In this case, the first network node continuously performs result measurement at the first time interval *tᵢ* by using the moment *t*₂ as the start moment. The first network node receives, at the moment *t*₃, the 1^{st} measurement packet sent by the second network node on the path 3. In this case, the first network node continuously performs result measurement at the first time interval *tᵢ* by using the moment *t*₃ as the start moment. The second network node periodically sends the result packet to the second network node at a moment *t*₁ *+ Ptᵢ,* where P is greater than or equal to 1. When P is equal to 1, the second network node receives the result packet for the first time. In the first result packet that is reported for the first time (at the moment *t*₁ *+ tᵢ*), only the measurement result of the path 1 includes measurement data, so that the second network node does not adjust bandwidth utilization of the three paths. For another example, as shown in FIG. 8, when P is equal to 3, the second network node receives the result packet for the third time. In the second result packet that is reported for the third time (at a moment *t*₁ + 3*tᵢ*), the measurement result of each of the three paths includes measurement data. That is, in the second result packet, the measurement result of the path 1 includes data of the third measurement of the path 1, the measurement result of the path 2 includes data of the first measurement of the path 2, and the measurement result of the path 3 includes data of the first measurement of the path 3, so that the second network node adjusts the bandwidth utilization of the path 1, the path 2, and the path 3. The second network node may allocate traffic on a path with a high congestion degree in the path 1, the path 2, and the path 3 to a path with a low congestion degree in the path 1, the path 2, and the path 3.

It should be understood that sequence numbers of the foregoing processes do not mean an execution sequence in the embodiments of this application. The execution sequence of the processes should be determined based on functions and internal logic of the processes, and should not be construed as any limitation on the implementation processes of the embodiments of this application.

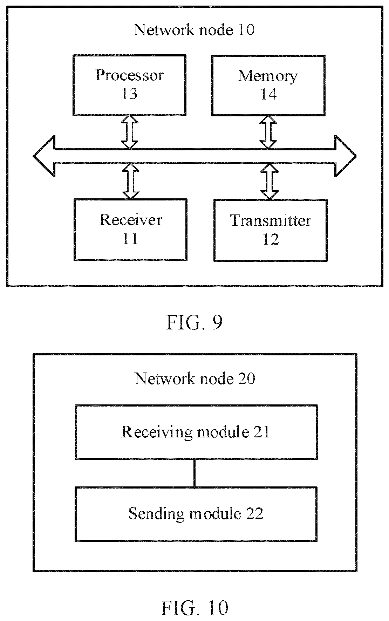

The foregoing describes in detail the measurement reporting method in the embodiments of this application with reference to FIG. 3 to FIG. 8. The following describes in detail apparatuses in the embodiments of this application with reference to FIG. 9 to FIG. 12.

An embodiment of this application provides a network node. The following describes a structure and functions of the network node with reference to FIG. 9. FIG. 9 is a schematic block diagram of a network node 10 according to an embodiment of this application. As shown in FIG. 9, the network node 10 includes a receiver 11 and a transmitter 12. Optionally, the network node 10 further includes a processor 13 and a memory 14. The receiver 11, the transmitter 12, the processor 13, and the memory 14 communicate with each other through an inner connection path, to transfer a control signal and/or a data signal. The memory 14 is configured to store a computer program. The processor 13 is configured to invoke the computer program from the memory 14 and run the computer program, to control the receiver 11 to receive a signal, and control the transmitter 12 to send a signal. When program instructions stored in the memory 14 are executed by the processor 13, the receiver 11 is configured to receive a first measurement packet, where the first measurement packet is used to indicate a first network node to report measurement results.

The transmitter 12 is configured to send a first result packet to a second network node, where the first result packet includes a result packet corresponding to a measurement result of each of a plurality of paths in a first time interval, and the first result packet is used to indicate the measurement result of each of the plurality of paths in the first time interval.

The processor 13 and the memory 14 may be combined into a processing apparatus. The processor 13 is configured to execute program code stored in the memory 14, to implement the foregoing functions. During specific implementation, the memory 14 may be integrated into the processor 13, or independent of the processor 13.

It should be understood that the network node 10 may correspond to the first network node in the network measurement reporting method 300 according to the embodiments of the present invention, and the network node 10 may include modules configured to perform the method performed by the first network node in the network measurement reporting method 300 in FIG. 3. In addition, the modules in the network node 10 and the foregoing other operations and/or functions are respectively intended to implement corresponding procedures of the network measurement reporting method 300 in FIG. 3. For a specific process of performing the foregoing corresponding steps by the units, refer to the foregoing descriptions of the method embodiment in FIG. 3. For brevity, details are not described herein again.

An embodiment of this application further provides a network node. The following describes a structure and functions of the network node with reference to FIG. 10. FIG. 10 is another schematic block diagram of a network node 20 according to an embodiment of this application. As shown in FIG. 10, the network node 20 includes a receiving module 21 and a sending module 22.

Optionally, the network node 20 may further include a processing module 23.

The receiving module 21, the sending module 22, and the processing module 23 may be implemented by software, or may be implemented by hardware. When the receiving module 21, the sending module 22, and the processing module 23 are implemented by hardware, the receiving module 21 may be the receiver 11 in FIG. 9, the sending module 22 may be the transmitter 12 in FIG. 9, and the processing module 23 may be the processor 13 in FIG. 9.

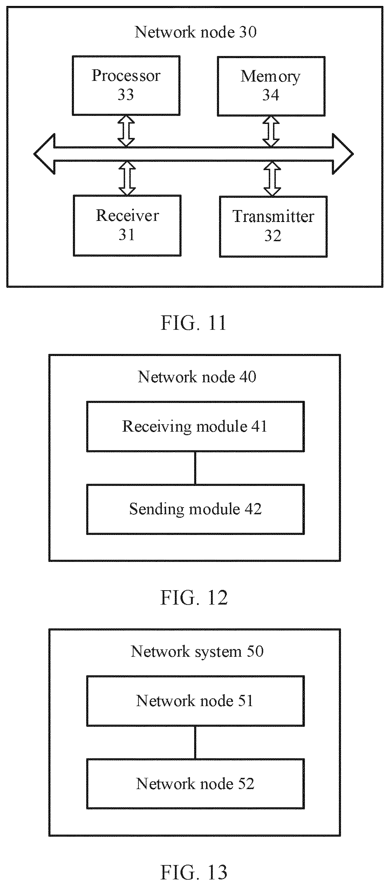

An embodiment of this application further provides another network node. The following describes a structure and functions of the network node with reference to FIG. 11. FIG. 11 is a schematic block diagram of a network node 10 according to an embodiment of this application. As shown in FIG. 11, the network node 30 includes a receiver 31 and a transmitter 32. Optionally, the network node 30 further includes a processor 33 and a memory 34. The receiver 31, the transmitter 32, the processor 33, and the memory 34 communicate with each other through an inner connection path, to transfer a control signal and/or a data signal. The memory 34 is configured to store a computer program. The processor 33 is configured to invoke the computer program from the memory 34 and run the computer program, to control the receiver 31 to receive a signal, and control the transmitter 32 to send a signal. When program instructions stored in the memory 34 are executed by the processor 33, the transmitter 12 is configured to send a first measurement packet, where the first measurement packet is used to indicate a first network node to report measurement results.

The receiver 31 is configured to receive a first result packet sent by the first network node.

The first result packet includes a result packet corresponding to a measurement result of each of a plurality of paths in a first time interval, and the first result packet is used to indicate the measurement result of each of the plurality of paths in the first time interval.

The processor 33 and the memory 34 may be combined into a processing apparatus. The processor 33 is configured to execute program code stored in the memory 34, to implement the foregoing functions. During specific implementation, the memory 34 may be integrated into the processor 33, or independent of the processor 33.

It should be understood that the network node 30 may correspond to the second network node in the network measurement reporting method 300 according to the embodiments of the present invention, and the network node 30 may include modules configured to perform the method performed by the second network node in the network measurement reporting method 300 in FIG. 3. In addition, the modules in the network node 30 and the foregoing other operations and/or functions are respectively intended to implement corresponding procedures of the network measurement reporting method 300 in FIG. 3. For a specific process of performing the foregoing corresponding steps by the units, refer to the foregoing descriptions of the method embodiment in FIG. 3. For brevity, details are not described herein again.

An embodiment of this application further provides a network node. The following describes a structure and functions of the network node with reference to FIG. 12. FIG. 12 is another schematic block diagram of a network node 40 according to an embodiment of this application. As shown in FIG. 12, the network node 40 includes a receiving module 41 and a sending module 42.

The receiving module 41 and the sending module 42 may be implemented by software, or may be implemented by hardware. When the receiving module 41 and the sending module 42 are implemented by hardware, the receiving module 41 may be the receiver 31 in FIG. 11, and the sending module 42 may be the transmitter 32 in FIG. 11.

It should be understood that, the processor in the embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logical device, a discrete gate or transistor logical device, a discrete hardware component, or the like. The general-purpose processor may be a microprocessor, or the processor may be any conventional processor or the like.

It should be further understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of random access memory (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a network system. FIG. 13 is a schematic block diagram of a network system 50 according to an embodiment of this application. As shown in FIG. 13, the network system 50 includes a network node 51 and a network node 52. The network node 51 may be the network node 10 shown in FIG. 9, and the network node 52 may be the network node 30 shown in FIG. 11. Alternatively, the network node 51 may be the network node 20 shown in FIG. 10, and the network node 52 may be the network node 40 shown in FIG. 12.

It should be understood that the network node 51 may correspond to the first network node in the network measurement reporting method 300 according to the embodiments of the present invention, and the network node 51 may include modules configured to perform the method performed by the first network node in the network measurement reporting method 300 in FIG. 3. The network node 52 may correspond to the second network node in the network measurement reporting method 300 according to the embodiments of the present invention, and the network node 52 may include modules configured to perform the method performed by the second network node in the network measurement reporting method 300 in FIG. 3. In addition, the modules in the network node 51 and the network node 52 and the foregoing other operations and/or functions are respectively intended to implement corresponding procedures of the network measurement reporting method 300 in FIG. 3. For a specific process of performing the foregoing corresponding steps by the units, refer to the foregoing descriptions of the method embodiment in FIG. 3. For brevity, details are not described herein again.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on a computer, all or some of the procedures or functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on a particular application and a design constraint condition of a technical solution. A person skilled in the art may use a different method to implement the described function for each particular application, but it should not be considered that the implementation goes beyond the scope of this application.

It may be clearly understood by a person skilled in the art that, for the purpose of convenient and brief description, for a detailed working process of the system, apparatus, and unit described above, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into units is merely logical function division and may be another division manner in an actual implementation. For example, a plurality of units or components may be combined or integrated into another system, or some features may be ignored or not performed. In addition, displayed or discussed mutual couplings or direct couplings or communication connections may be indirect couplings or communication connections using some interfaces, apparatuses, or units, and may have an electrical form, a mechanical form, or another form.

The units described as separate parts may or may not be physically separate, and parts displayed as units may or may not be physical units, may be located at one position, or may be distributed on a plurality of network units. Some or all of the units may be selected according to an actual requirement to achieve the objectives of the solutions in the embodiments.

In addition, function units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement reporting method (300), wherein the method is performed in a communication system comprising a first network node and a second network node, a plurality of paths are configured for one tunnel between the first network node and the second network node, the method is applied to the first network node, **characterized in that** the method comprises:
receiving (330) from the second network node measurement packets on the plurality of paths, wherein the measurement packets comprise a fist measurement packet, wherein the first measurement packet is used to indicate the first network node to report measurement results, wherein the first measurement packet is a measurement packet first received by the first network node on the plurality of paths; and
sending (340) a first result packet to the second network node, wherein the first result packet comprises a result packet corresponding to a measurement result of each of the plurality of paths in a first time interval, and the first result packet is used to indicate the measurement result of each of the plurality of paths in the first time interval.

2. The method (300) according to claim 1, wherein the method further comprises:
sending a second result packet to the second network node at a periodicity of the first time interval, wherein the second result packet comprises the result packet corresponding to the measurement result of each of the plurality of paths in the first time interval, and the second result packet is used to indicate the measurement result of each of the plurality of paths in the first time interval.

3. The method (300) according to claim 1, wherein the first result packet further comprises a sequence number of the result packet corresponding to the measurement result of each of the plurality of paths in the first time interval, and the sequence number of the result packet is used to indicate a ranking of the result packet generated by the first network node.

4. The method (300) according to claim 2, wherein the second result packet further comprises a sequence number of the result packet corresponding to the measurement result of each of the plurality of paths in the first time interval, and the sequence number of the result packet is used to indicate a ranking of the result packet generated by the first network node.

5. The method (300) according to claim 1, wherein the first time interval is less than or equal to a first time offset, and the first time offset comprises an offset between time at which the first network node generates measurement result packets with a same sequence number.

6. The method (300) according to any one of claims 1 to 5, wherein the method further comprises:
receiving (310) a setting packet, wherein the setting packet is used to indicate a measurement time interval of each of the plurality of paths, and the setting packet comprises the first time interval; and
setting the measurement time interval of each of the plurality of paths as the first time interval based on the setting packet.

7. A first network node (10, 20), wherein the first network node is comprised in a network comprising the first network node and a second network node (30, 40), wherein a plurality of paths are configured for one tunnel between the first network node (10, 20) and the second network node (30, 40), **characterized in that** the first network node (10, 20) comprises:
a receiving module (11, 21), configured to receive from the second network node (30, 40) measurement packets on the plurality of paths, wherein the measurement packets comprise a first measurement packet, wherein the first measurement packet is used to indicate the first network node (10, 20) to report measurement results, wherein the first measurement packet is a measurement packet first received by the first network node on the plurality of paths; and
a sending module (12, 22), configured to send a first result packet to the second network node (30, 40), wherein the first result packet comprises a result packet corresponding to a measurement result of each of the plurality of paths in a first time interval, and the first result packet is used to indicate the measurement result of each of the plurality of paths in the first time interval.

8. The first network node (10, 20) according to claim 7, wherein the sending module (12, 22) is further configured to:
send a second result packet to the second network node (30, 40) at a periodicity of the first time interval, wherein the second result packet comprises the result packet corresponding to the measurement result of each of the plurality of paths in the first time interval, and the second result packet is used to indicate the measurement result of each of the plurality of paths in the first time interval.

9. The first network node (10, 20) according to claim 7, wherein the first result packet further comprises a sequence number of the result packet corresponding to the measurement result of each of the plurality of paths in the first time interval, and the sequence number of the result packet is used to indicate a ranking of the result packet generated by the first network node (10, 20).

10. The first network node (10, 20) according to claim 8, wherein the second result packet further comprises a sequence number of the result packet corresponding to the measurement result of each of the plurality of paths in the first time interval, and the sequence number of the result packet is used to indicate a ranking of the result packet generated by the first network node (10, 20).

11. The first network node (10, 20) according to claim 7, wherein the first time interval is less than or equal to a first time offset, and the first time offset comprises an offset between time at which the first network node (10, 20) generates measurement result packets with a same sequence number.

12. The first network node (10, 20) according to any one of claims 7 to 11, wherein the first network node (10, 20) further comprises a processing module (13, 23), wherein
the receiving module (11, 21) is further configured to receive a setting packet, wherein the setting packet is used to indicate a measurement time interval of each of the plurality of paths, and the setting packet comprises the first time interval; and
the processing module (13, 23) is further configured to set the measurement time interval of each of the plurality of paths as the first time interval based on the setting packet.

13. A network system, comprising a first network node in accordance with any one of claims 7 to 12 and a second network node, wherein a plurality of paths are configured for one tunnel between the first network node and the second network node, wherein
the second network node comprises a sending module, configured to send a first measurement packet, where the first measurement packet is used to indicate the first network node to report measurement results; and
the second network node comprises a receiving module, configured to receive a first result packet sent by the first network node, where the first result packet includes a result packet corresponding to a measurement result of each of the plurality of paths in a first time interval, and the first result packet is used to indicate the measurement result of each of the plurality of paths in the first time interval.

14. The network system according to claim 13, wherein the sending module comprised in the second network node is further configured to send a setting packet, where the setting packet is used to indicate a measurement time interval of each of the plurality of paths, and the setting packet includes the first time interval.

15. The network system according to claim 14, wherein, when a measurement parameter further includes a quantity of paths, the setting packet further includes the quantity of paths.

## Patentansprüche

1. Messmeldungsverfahren (300), wobei das Verfahren in einem Kommunikationssystem, umfassend einen ersten Netzwerkknoten und einen zweiten Netzwerkknoten, durchgeführt wird, eine Vielzahl von Pfaden für einen Tunnel zwischen dem ersten Netzwerkknoten und dem zweiten Netzwerkknoten konfiguriert ist und das Verfahren auf den ersten Netzwerkknoten angewandt wird, **dadurch gekennzeichnet, dass** das Verfahren Folgendes umfasst:
Empfangen (330), von dem zweiten Netzwerkknoten, von Messpaketen auf der Vielzahl von Pfaden, wobei die Messpakete ein erstes Messpaket umfassen, wobei das erste Messpaket dazu verwendet wird, dem ersten Netzwerkknoten anzugeben, Messergebnisse zu melden, wobei das erste Messpaket ein Messpaket ist, das zuerst durch den ersten Netzwerkknoten auf der Vielzahl von Pfaden empfangen wird; und
Senden (340) eines ersten Ergebnispakets an den zweiten Netzwerkknoten, wobei das erste Ergebnispaket ein Ergebnispaket umfasst, das einem Messergebnis jedes der Vielzahl von Pfaden in einem ersten Zeitintervall entspricht, und das erste Ergebnispaket dazu verwendet wird, das Messergebnis jedes der Vielzahl von Pfaden in dem ersten Zeitintervall anzugeben.

2. Verfahren (300) nach Anspruch 1, wobei das Verfahren ferner Folgendes umfasst:
Senden eines zweiten Ergebnispakets an den zweiten Netzwerkknoten mit einer Periodizität des ersten Zeitintervalls, wobei das zweite Ergebnispaket das Ergebnispaket umfasst, das dem Messergebnis jedes der Vielzahl von Pfaden in dem ersten Zeitintervall entspricht, und das zweite Ergebnispaket dazu verwendet wird, das Messergebnis jedes der Vielzahl von Pfaden in dem ersten Zeitintervall anzugeben.

3. Verfahren (300) nach Anspruch 1, wobei das erste Ergebnispaket ferner eine Sequenznummer des Ergebnispakets umfasst, das dem Messergebnis jedes der Vielzahl von Pfaden in dem ersten Zeitintervall entspricht, und die Sequenznummer des Ergebnispakets dazu verwendet wird, eine Rangfolge des Ergebnispakets anzugeben, das durch den ersten Netzwerkknoten erzeugt wird.

4. Verfahren (300) nach Anspruch 2, wobei das zweite Ergebnispaket ferner eine Sequenznummer des Ergebnispakets umfasst, das dem Messergebnis jedes der Vielzahl von Pfaden in dem ersten Zeitintervall entspricht, und die Sequenznummer des Ergebnispakets dazu verwendet wird, eine Rangfolge des Ergebnispakets anzugeben, das durch den ersten Netzwerkknoten erzeugt wird.

5. Verfahren (300) nach Anspruch 1, wobei das erste Zeitintervall kleiner als oder gleich einem ersten Zeitversatz ist und der erste Zeitversatz einen Versatz zwischen Zeitpunkten umfasst, zu denen der erste Netzwerkknoten Messergebnispakete mit einer gleichen Sequenznummer erzeugt.

6. Verfahren (300) nach einem der Ansprüche 1 bis 5, wobei das Verfahren ferner Folgendes umfasst:
Empfangen (310) eines Einstellungspakets, wobei das Einstellungspaket dazu verwendet wird, ein Messzeitintervall jedes der Vielzahl von Pfaden anzugeben, und das Einstellungspaket das erste Zeitintervall umfasst; und
Einstellen des Messzeitintervalls jedes der Vielzahl von Pfaden als das erste Zeitintervall basierend auf dem Einstellungspaket.

7. Erster Netzwerkknoten (10, 20), wobei der erste Netzwerkknoten in einem Netzwerk, umfassend den ersten Netzwerkknoten und einen zweiten Netzwerkknoten (30, 40), umfasst ist, wobei eine Vielzahl von Pfaden für einen Tunnel zwischen dem ersten Netzwerkknoten (10, 20) und dem zweiten Netzwerkknoten (30, 40) konfiguriert ist, **dadurch gekennzeichnet, dass** der erste Netzwerkknoten (10, 20) Folgendes umfasst:
ein Empfangsmodul (11, 21), das dazu konfiguriert ist, von dem zweiten Netzwerkknoten (30, 40) Messpakete auf der Vielzahl von Pfaden zu empfangen, wobei die Messpakete ein erstes Messpaket umfassen, wobei das erste Messpaket dazu verwendet wird, dem ersten Netzwerkknoten (10, 20) anzugeben, Messergebnisse zu melden, wobei das erste Messpaket ein Messpaket ist, das zuerst durch den ersten Netzwerkknoten auf der Vielzahl von Pfaden empfangen wird; und
ein Sendemodul (12, 22), das dazu konfiguriert ist, ein erstes Ergebnispaket an den zweiten Netzwerkknoten (30, 40) zu senden, wobei das erste Ergebnispaket ein Ergebnispaket umfasst, das einem Messergebnis jedes der Vielzahl von Pfaden in einem ersten Zeitintervall entspricht, und das erste Ergebnispaket dazu verwendet wird, das Messergebnis jedes der Vielzahl von Pfaden in dem ersten Zeitintervall anzugeben.

8. Erster Netzwerkknoten (10, 20) nach Anspruch 7, wobei das Sendemodul (12, 22) ferner zu Folgendem konfiguriert ist:
Senden eines zweiten Ergebnispakets an den zweiten Netzwerkknoten (30, 40) mit einer Periodizität des ersten Zeitintervalls, wobei das zweite Ergebnispaket das Ergebnispaket umfasst, das dem Messergebnis jedes der Vielzahl von Pfaden in dem ersten Zeitintervall entspricht, und das zweite Ergebnispaket dazu verwendet wird, das Messergebnis jedes der Vielzahl von Pfaden in dem ersten Zeitintervall anzugeben.

9. Erster Netzwerkknoten (10, 20) nach Anspruch 7, wobei das erste Ergebnispaket ferner eine Sequenznummer des Ergebnispakets umfasst, das dem Messergebnis jedes der Vielzahl von Pfaden in dem ersten Zeitintervall entspricht, und die Sequenznummer des Ergebnispakets dazu verwendet wird, eine Rangfolge des Ergebnispakets anzugeben, das durch den ersten Netzwerkknoten (10, 20) erzeugt wird.

10. Erster Netzwerkknoten (10, 20) nach Anspruch 8, wobei das zweite Ergebnispaket ferner eine Sequenznummer des Ergebnispakets umfasst, das dem Messergebnis jedes der Vielzahl von Pfaden in dem ersten Zeitintervall entspricht, und die Sequenznummer des Ergebnispakets dazu verwendet wird, eine Rangfolge des Ergebnispakets anzugeben, das durch den ersten Netzwerkknoten (10, 20) erzeugt wird.

11. Erster Netzwerkknoten (10, 20) nach Anspruch 7, wobei das erste Zeitintervall kleiner als oder gleich einem ersten Zeitversatz ist und der erste Zeitversatz einen Versatz zwischen Zeitpunkten umfasst, zu denen der erste Netzwerkknoten (10, 20) Messergebnispakete mit einer gleichen Sequenznummer erzeugt.

12. Erster Netzwerkknoten (10, 20) nach einem der Ansprüche 7 bis 11, wobei der erste Netzwerkknoten (10, 20) ferner ein Verarbeitungsmodul (13, 23) umfasst, wobei
das Empfangsmodul (11, 21) ferner dazu konfiguriert ist, ein Einstellungspaket zu empfangen, wobei das Einstellungspaket dazu verwendet wird, ein Messzeitintervall jedes der Vielzahl von Pfaden anzugeben, und das Einstellungspaket das erste Zeitintervall umfasst; und
das Verarbeitungsmodul (13, 23) ferner dazu konfiguriert ist, das Messzeitintervall jedes der Vielzahl von Pfaden basierend auf dem Einstellungspaket als das erste Zeitintervall einzustellen.

13. Netzwerksystem, umfassend einen ersten Netzwerkknoten nach einem der Ansprüche 7 bis 12 und einen zweiten Netzwerkknoten, wobei eine Vielzahl von Pfaden für einen Tunnel zwischen dem ersten Netzwerkknoten und dem zweiten Netzwerkknoten konfiguriert ist, wobei
der zweite Netzwerkknoten ein Sendemodul umfasst, das dazu konfiguriert ist, ein erstes Messpaket zu senden, wobei das erste Messpaket dazu verwendet wird, dem ersten Netzwerkknoten anzugeben, Messergebnisse zu melden; und
der zweite Netzwerkknoten ein Empfangsmodul umfasst, das dazu konfiguriert ist, ein erstes Ergebnispaket zu empfangen, das durch den ersten Netzwerkknoten gesendet wird, wobei das erste Ergebnispaket ein Ergebnispaket beinhaltet, das einem Messergebnis jedes der Vielzahl von Pfaden in einem ersten Zeitintervall entspricht, und das erste Ergebnispaket dazu verwendet wird, das Messergebnis jedes der Vielzahl von Pfaden in dem ersten Zeitintervall anzugeben.

14. Netzwerksystem nach Anspruch 13, wobei das Sendemodul, das in dem zweiten Netzwerkknoten umfasst ist, ferner dazu konfiguriert ist, ein Einstellungspaket zu senden, wobei das Einstellungspaket dazu verwendet wird, ein Messzeitintervall jedes der Vielzahl von Pfaden anzugeben, und das Einstellungspaket das erste Zeitintervall beinhaltet.

15. Netzwerksystem nach Anspruch 14, wobei das Einstellungspaket, wenn ein Messparameter ferner eine Anzahl an Pfaden umfasst, ferner die Anzahl an Pfaden beinhaltet.

## Revendications

1. Procédé de rapport de mesure (300), dans lequel le procédé est réalisé dans un système de communication comprenant un premier nœud de réseau et un second nœud de réseau, une pluralité de chemins sont configurés pour un tunnel entre le premier nœud de réseau et le second nœud de réseau, le procédé est appliqué au premier nœud de réseau, **caractérisé en ce que** le procédé comprend :
la réception (330) en provenance du second nœud de réseau de paquets de mesure sur la pluralité de chemins, dans lequel les paquets de mesure comprennent un premier paquet de mesure, dans lequel le premier paquet de mesure est utilisé pour indiquer au premier nœud de réseau de signaler les résultats de mesure, dans lequel le premier paquet de mesure est un paquet de mesure reçu en premier par le premier nœud de réseau sur la pluralité de chemins ; et
l'envoi (340) d'un premier paquet de résultats au second nœud de réseau, dans lequel le premier paquet de résultats comprend un paquet de résultats correspondant à un résultat de mesure de chacun de la pluralité de chemins dans un premier intervalle de temps, et le premier paquet de résultats est utilisé pour indiquer le résultat de mesure de chacun de la pluralité de chemins dans le premier intervalle de temps.

2. Procédé (300) selon la revendication 1, dans lequel le procédé comprend également :
l'envoi d'un second paquet de résultats au second nœud de réseau à une périodicité du premier intervalle de temps, dans lequel le second paquet de résultats comprend le paquet de résultats correspondant au résultat de mesure de chacun de la pluralité de chemins dans le premier intervalle de temps, et le second paquet de résultats est utilisé pour indiquer le résultat de mesure de chacun de la pluralité de chemins dans le premier intervalle de temps.

3. Procédé (300) selon la revendication 1, dans lequel le premier paquet de résultats comprend également un numéro de séquence du paquet de résultats correspondant au résultat de mesure de chacun de la pluralité de chemins dans le premier intervalle de temps, et le numéro de séquence du paquet de résultats est utilisé pour indiquer un classement du paquet de résultats généré par le premier nœud de réseau.

4. Procédé (300) selon la revendication 2, dans lequel le second paquet de résultats comprend également un numéro de séquence du paquet de résultats correspondant au résultat de mesure de chacun de la pluralité de chemins dans le premier intervalle de temps, et le numéro de séquence du paquet de résultats est utilisé pour indiquer un classement du paquet de résultats généré par le premier nœud de réseau.

5. Procédé (300) selon la revendication 1, dans lequel le premier intervalle de temps est inférieur ou égal à un premier décalage temporel, et le premier décalage temporel comprend un décalage entre le moment auquel le premier nœud de réseau génère des paquets de résultats de mesure avec un même numéro de séquence.

6. Procédé (300) selon l'une quelconque des revendications 1 à 5, dans lequel le procédé comprend également :
la réception (310) d'un paquet de réglage, dans lequel le paquet de réglage est utilisé pour indiquer un intervalle de temps de mesure de chacun de la pluralité de chemins, et le paquet de réglage comprend le premier intervalle de temps ; et
le réglage de l'intervalle de temps de mesure de chacun de la pluralité de chemins comme premier intervalle de temps sur la base du paquet de réglage.

7. Premier nœud de réseau (10, 20), dans lequel le premier nœud de réseau est compris dans un réseau comprenant le premier nœud de réseau et un second nœud de réseau (30, 40), dans lequel une pluralité de chemins sont configurés pour un tunnel entre le premier nœud de réseau (10, 20) et le second nœud de réseau (30, 40), **caractérisé en ce que** le premier nœud de réseau (10, 20) comprend :
un module de réception (11, 21), configuré pour recevoir en provenance du second nœud de réseau (30, 40) des paquets de mesure sur la pluralité de chemins, dans lequel les paquets de mesure comprennent un premier paquet de mesure, dans lequel le premier paquet de mesure est utilisé pour indiquer au premier nœud de réseau (10, 20) de signaler les résultats de mesure, dans lequel le premier paquet de mesure est un paquet de mesure reçu en premier par le premier nœud de réseau sur la pluralité de chemins ; et
un module d'envoi (12, 22) configuré pour envoyer un premier paquet de résultats au second c de réseau (30, 40), dans lequel le premier paquet de résultats comprend un paquet de résultats correspondant à un résultat de mesure de chacun de la pluralité de chemins dans un premier intervalle de temps, et le premier paquet de résultats est utilisé pour indiquer le résultat de mesure de chacun de la pluralité de chemins dans le premier intervalle de temps.

8. Premier nœud de réseau (10, 20) selon la revendication 7, dans lequel le module d'envoi (12, 22) est également configuré pour :
envoyer un second paquet de résultats au second nœud de réseau (30, 40) à une périodicité du premier intervalle de temps, dans lequel le second paquet de résultats comprend le paquet de résultats correspondant au résultat de mesure de chacun de la pluralité de chemins dans le premier intervalle de temps, et le second paquet de résultats est utilisé pour indiquer le résultat de mesure de chacun de la pluralité de chemins dans le premier intervalle de temps.

9. Premier nœud de réseau (10, 20) selon la revendication 7, dans lequel le premier paquet de résultats comprend également un numéro de séquence du paquet de résultats correspondant au résultat de mesure de chacun de la pluralité de chemins dans le premier intervalle de temps, et le numéro de séquence du paquet de résultats est utilisé pour indiquer un classement du paquet de résultats généré par le premier nœud de réseau (10, 20).

10. Premier nœud de réseau (10, 20) selon la revendication 8, dans lequel le second paquet de résultats comprend également un numéro de séquence du paquet de résultats correspondant au résultat de mesure de chacun de la pluralité de chemins dans le premier intervalle de temps, et le numéro de séquence du paquet de résultats est utilisé pour indiquer un classement du paquet de résultats généré par le premier nœud de réseau (10, 20).

11. Premier nœud de réseau (10, 20) selon la revendication 7, dans lequel le premier intervalle de temps est inférieur ou égal à un premier décalage temporel, et le premier décalage temporel comprend un décalage entre le moment auquel le premier nœud de réseau (10, 20) génère des paquets de résultats de mesure avec un même numéro de séquence.

12. Premier nœud de réseau (10, 20) selon l'une quelconque des revendications 7 à 11, dans lequel le premier nœud de réseau (10, 20) comprend également un module de traitement (13, 23), dans lequel
le module de réception (11, 21) est également configuré pour recevoir un paquet de réglage, dans lequel le paquet de réglage est utilisé pour indiquer un intervalle de temps de mesure de chacun de la pluralité de chemins, et le paquet de réglage comprend le premier intervalle de temps ; et
le module de traitement (13, 23) est également configuré pour régler l'intervalle de temps de mesure de chacun de la pluralité de chemins comme premier intervalle de temps sur la base du paquet de réglage.

13. Système de réseau, comprenant un premier nœud de réseau selon l'une quelconque des revendications 7 à 12 et un second nœud de réseau, dans lequel une pluralité de chemins sont configurés pour un tunnel entre le premier nœud de réseau et le second nœud de réseau, dans lequel
le second nœud de réseau comprend un module d'envoi, configuré pour envoyer un premier paquet de mesure, où le premier paquet de mesure est utilisé pour indiquer au premier nœud de réseau de signaler les résultats de mesure ; et
le second nœud de réseau comprend un module de réception, configuré pour recevoir un premier paquet de résultats envoyé par le premier nœud de réseau, où le premier paquet de résultats comporte un paquet de résultats correspondant à un résultat de mesure de chacun de la pluralité de chemins dans un premier intervalle de temps, et le premier paquet de résultats est utilisé pour indiquer le résultat de mesure de chacun de la pluralité de chemins dans le premier intervalle de temps.

14. Système de réseau selon la revendication 13, dans lequel le module d'envoi compris dans le second nœud de réseau est également configuré pour envoyer un paquet de réglage, où le paquet de réglage est utilisé pour indiquer un intervalle de temps de mesure de chacun de la pluralité de chemins, et le paquet de réglage comporte le premier intervalle de temps.

15. Système de réseau selon la revendication 14, dans lequel, lorsqu'un paramètre de mesure comporte également une quantité de chemins, le paquet de réglage comporte également la quantité de chemins.
